# EUROPÄISCHE PATENTSCHRIFT

(11) **EP 1 552 164 B1**
(45) Veröffentlichungstag und Bekanntmachung des Hinweises auf die Patenterteilung: **05.12.2007**
(21) Anmeldenummer: 03757871.3
(22) Anmeldetag: 19.09.2003
(51) Int. Cl.: F16B 7/18

(54) **VERBINDUNGSEINRICHTUNG FÜR ZWEI WERKSTÜCKE, INSBESONDERE FÜR STRANGARTIGE HOHLPROFILE**
CONNECTING DEVICE FOR TWO WORKPIECES, PARTICULARLY FOR BAR-TYPE HOLLOW PROFILED MEMBERS
DISPOSITIF D'ASSEMBLAGE DE DEUX PIECES, NOTAMMENT DE PROFILES CREUX EN FORME DE BARRES

(30) Priorität: 23.09.2002 DE 20214703 U; 07.12.2002 DE 20218988 U
(43) Veröffentlichungstag der Anmeldung: 13.07.2005
(73) Patentinhaber: Holscher, Winfried K.W., 78224 Singen (DE)
(72) Erfinder: Holscher, Winfried K.W., 78224 Singen (DE)
(74) Vertreter: Hiebsch, Gerhard F.
(86) Internationale Anmeldenummer: PCT/EP2003/010433
(87) Internationale Veröffentlichungsnummer: WO 2004/029465

(56) Entgegenhaltungen:
- EP-A- 0 004 374
- EP-A- 1 199 481
- DE-A- 4 244 395
- DE-B- 1 013 410
- DE-B- 1 625 483
- FR-A- 1 480 511
- FR-A- 2 116 717
- FR-A- 2 369 411
- US-A- 3 545 625
- US-A- 5 192 145
- US-B1- 6 382 866

## Beschreibung

Die Erfindung betrifft eine Verbindungseinrichtung zum Anschluss eines einen Innenraum aufweisenden ersten Werkstückesinsbesondere eines strangartigen Hohlprofils -- an ein anderes derartiges zwertes Werkstück mittels einer Spannschraube, deren Schaft zum Einpreifen in eine Öffnung -- insbesondere eine Längsnut -- des zweiten Werkstückes vorgesehen ist und in einem Innenraum des zweiten Werkstückes in ein Gegenelement einsetzbar ist, nach dem Oberbegriff der unabhängigen Patentansprüche.

Der US-A-5,192,145 sind zwei Hohlprofile etwa quadratischen Querschnitts mit in jeder Seitenwand mittig verlaufender achsparalleler Längsnut zu entnehmen, die einander rechtwinkelig zugeordnet sind; eine Stirnfläche des einen Hohlprofils ist einer Seitenwand des anderen Hohlprofils zugeordnet. In letzterem sind in einem Hinterschneidungsraum der -- zum anderen Hohlprofil weisenden -- Längsnut zwei stabartige Einschubstücke mit jeweils einer -- quer zur Längsachse des Hohlprofils verlaufenden -- Bohrung zu erkennen. Jedes dieser Einschubstücke dient zur Aufnahme des Endes eines Schraubschaftes als Teil einer Spannschraube, die achsparallel in einer Längsnut des anderen Hohlprofils verläuft und dabei eine Schraubhülse mit Außengewinde durchsetzt. Letzteres wird in Profilflächen eingekerbt, die jene hinterschnittene Längsnut umgeben. Das Außengewinde endet im Spannzustand an der Stirnfläche des die Schraubhülse aufnehmenden Hohlprofils. Der Schraubschaft greift endwärts in die Längsnut des anderen Hohlprofils ein und endet - - wie gesagt -- in jenem Einschubstück.

Aus der FR-A-1 480 511 ist ebenfalls ein Hohlprofil mit hinterschnittenen Längsnuten bekannt, dessen Seitenwänden jeweils ein hohler Haltekörper etwa quadratischen Querschnitts zugeordnet ist, der mit einem an ihn anzuschraubenden, querschnittlich an die Nutform angepassten, in Ein baulage achsparallelen Fuß in die Längsnut eingeschoben wird und andernends in ein -- auch hier rechtwinkelig zum Hohlprofil verlaufendes -- Anschlussprofil einragt.

Die FR-A-2 369 411 zeigt eine Leiter mit zwei parallelen Seitenprofilen und diese in Abstand verbindenden Sprossen aus Hohlprofilen. Jedes Sprossenende wird stirnseitig mit einem Klemmelement in einem der ebenfalls von Hohlprofilen gebildeten Seitenprofile festgelegt.

Ein Nutenstein zum Einsatz in eine Längsnut eines Profilstabes, der zum Arretieren an seiner Unterseite elastische Mittel hat, die sich reibschlüssig an die Flanken der Längsnut anlegen, offenbart die DE-A1-42 44 395. Außerdem wird ein Profilverbinder beschrieben, der aus zwei derartigen Nutensteinen besteht und dank dessen zwei Profilstäbe miteinander verbunden zu werden vermögen.

Nach der FR-A-2 116 717 können zum Verbinden zweier einends auf Gehrung geschnittener Flachprofile in diese jeweils zwei Winkelstücke eingeschoben werden, die dann -- übereinanderliegenddurch mittig angebrachte kurze Spannschrauben gegeneinander verspannt werden. Das eine Winkelstück stützt sich dabei gegen den Boden des Flachprofils ab, während das andere Winkelstück gegen seitliche Rippen des Flachprofils gedrückt wird.

Auch die DE-AS 1 013 410 befasst sich mit einer Eckverbindung für Hohlprofile mit in diese einschiebbaren Winkelstücken, deren Schenkel geschlitzt sind. Der jeweils äußere Schenkel weist eine Bohrung auf, durch die eine Schraube in Richtung auf den inneren Schenkel geführt ist, so dass beim Eindrehen der Schraube durch den Druck der Schraubenspitze auf den inneren Schenkel die beiden Schenkel auseinander gespreizt werden. Die Winkelstücke sind aus Metall, insbesondere aus Leichtmetall gefertigt. Diese Verbindung wird durch Verwendung von Kunststoffklebern oder anderen aushärtbaren Metallklebern unlösbar.

Die Schrift zu DE 92 15 843 des Anmelders beschreibt eine Verbindungseinrichtung zum Festlegen in einem hinterschnittenen Innenraum einer Längsnut eines Hohlprofils od.dgl. Werkstücks mit wenigstens einer die Breite des engen Nutenquerschnitts übersteigenden Erstreckung zum Anschluss eines die Längsnuten aufweisenden ersten Werkstückes an ein anderes Werkstück, welches seinerseits mit Längsnuten versehen ist, deren Querschnitt sich zur Profilstirn hin öffnet. Dieses Element kommt insbesondere bei metallischen Hohlprofilen zur Anwendung, deren Innenraum von außen her nicht zugänglich ist; es ist etwa quaderförmig ausgebildet und weist wenigstens zwei einander gegenüberliegende, in einem Winkel geneigte Flankenwände auf sowie ein Federorgan, das einerseits an einer der geneigten Flankenwände festliegt und anderseits die engere Oberfläche des Elements mit seinem freien Ende übergreift. Dieses ist in entspanntem Zustand der Feder in Abstand zum Element angeordnet. Wird das Federorgan an das Mutterelement angedrückt, kann dieses -- mit seiner Schmalseite zuerst -- ohne weiteres in die hinterschnittene Nut eingeschoben werden.

Bei einem anderen Verbindungsorgan zum Festlegen in einem hinterschnittenen Nutenraum einer Längsnut eines Hohlprofils nach DE 198 40 057 A1 des Anmelders sowie zum Anschluss des Hohlprofils an ein anderes, seinerseits mit entsprechenden Längsnuten versehenes Werkstück, ist an der Oberfläche von Winkelarmen eines winkelförmigen Formstückes als Befestigungs- oder Verbindungseinrichtung jeweils zumindest eine der Breite einer den engen Nutenquerschnitt bildenden Längsnut etwa entsprechende Anformung vorgesehen sowie im Winkelarm wenigstens eine ihn durchsetzende Schraube angebracht; die Breite des Winkelarms übersteigt die Breite der Längsnut. Zudem verjüngt sich der Querschnitt der Anformung von der Oberfläche des Winkelarms weg.

In Kenntnis dieser Gegebenheiten hat sich der Erfinder das Ziel gesetzt, eine betriebssichere und wieder lösbare Befestigungsmöglichkeit von insbesondere stranggepressten Hohlprofilen mehreckigen -- bevorzugt rechteckigen -- Querschnittes zu schaffen, die miteinander in einem etwa rechten Winkel zu verbinden sind. Vor allem soll ein System verbessert werden, bei dem die Profilstirn des einen Werkstückes auf einer Längsseite des anderen Werkstückes aufliegt und daranweitestgehend verdrehsicher -- gehalten wird.

Zur Lösung dieser Aufgabe führt die Lehre der unabhängigen Ansprüche; die Unteransprüche geben günstige Weiterbildungen an.

Erfindungsgemäß weist die Hülse zumindest drei zu deren Längsachse parallele Gruppen von Außenrippen auf, die in Befestigungslage Radialnuten des ersten Werkstücks zugeordnet sind. Letztere sind im Nutentiefsten sowie in zueinander weisenden Flächen von die Längsnut an der Profilseitenfläche begrenzenden Formrippen anbringbar.

Diese querschnittlich etwa dreiecksförmigen Außenrippen sollen mit ihren Rippenflächen in Förmrinnen der Hülsenaußenfläche übergehen. Zudem sollen diequerschnittlich gesehenen -- Rippenspitzen mehrerer Außenrippen zueinander parallel verlaufen und so ein kammartiges Profil schaffen, dessen Zähne mit jenen rinnenartigen Gegenorganen haltend zusammenwirken.

Als günstig hat es sich erwiesen, dass in Befestigungslage der Hülse ihr einer Hülsenrand mit einer Stirnfläche des sie aufnehmenden Werkstückes etwa fluchtet. Zwischen dem Hülsenrand und dem Schraubkopf soll im übrigen ein den Gewindebereich der Spannschraube umgebender Ring aus elastischem Werkstoff angeordnet sein, dank dessen eine bessere Spannstellung entsteht sowie eine Beschädigung des Gewindes vermieden wird.

Dem zweiten Hülsenrand soll im übrigen der -- stirnseitig mit einem Sackloch mehrkantigen Querschnitts verseheneSchraubenkopf der Spannschraube in Spannstellung aufsitzen, so dass der Gewindebereich möglichst weit aus der Hülse in die hinterschnittene Längsnut des anderen Hohlprofils ragt.

Nach einem anderen Merkmal der Erfindung ist der auf die Spannschraube aufschraubbare Schraubkopf plattenförmig ausgebildet und seine Länge ist etwas kürzer als die Breite des ihn aufnehmenden Nutenraumes der hinterschnittenen Längsnut des rechtwinkelig anzuschließenden zweiten Hohlprofils. Als günstig hat es sich erwiesen, die oben erwähnten -- die Längsnut beidseits begrenzenden -- Formrippen hakenartig sowie die zum Nutentiefsten gerichteten Flächen der Hakenenden als Widerlager für den Schraubkopf auszubilden. Dabei entspricht die Höhe der Hakenenden bevorzugt der Höhe des zwischen ihren gelagerten Ringes aus elastischem Werkstoff.

Bei einer anderen Ausgestaltung der erfindungsgemäßen Verbindungseinrichtung wird in den Innenraum des ersten Werkstückes oder Hohlprofils rechteckigen Querschnitts ein -- die Innenflächen von dessen vier Seitenwänden berührende -- querschnittlich kreuzartiges Formstück einschiebbar und im Hohlprofil so fastlegbar, dass eine der Stirnflächen des Formstücks mit der einen Stirnfläche des Hohlprofils etwa fluchtet und ein Gewindebereich der Spannschraube über diese Stirnfläche in den Innenraum des anderen, zweiten Hohlprofils ragt sowie dort mit einem als Schraubsteg ausgebildeten und der Innenfläche dieses anderen, zweiten Hohlprofils anliegenden Gegenorgan verbindbar ist.

Dabei hat es sich als günstig erwiesen, die seitlichen Stirnkanten von dessen vier Formstückrippen jeweils mit einem Schraubloch für eine die Seitenwand des Hohlprofils durchsetzende Schraube oder Schraubhülse zu versehen.

Nach einem weiteren Merkmal der Erfindung enthält die seitliche Stirnkante der Formstückrippe wenigstens einen quer zur Längsachse des Formstücks verlaufenden rinnenartigen Einschnitt, dessen beide Seitenwände bevorzugt in einem Winkel zueinander so geneigt sind, dass sich der Querschnitt des Einschnitts nach außen erweitert, um in Spannstellung des Formstücks eine Einformung der Seitenwand des Hohlprofils aufzunehmen; bevorzugt sollen zwei beidseits der Längsachse einander gegenüberliegende Einschnitte eine der -- beispielsweise durch einen Kerbschlag erzeugten -- Einformungen aufnehmen.

Vorteilhafterweise verläuft in der Längsachse des Formstücks ein Durchgang für einen die Spannschraube bildenden Haltebolzen; in diesen Durchgang münden dann die Schraublöcher der Formstückrippen, denn die darin geführten Schrauben sollen den Haltebolzen fixieren.

Der einen -- an einen Bolzenkörper axial angeformten -- Gewindebolzen als Spannschraube enthaltende Haltebolzen ist im Bereich jenes Bolzenkörpers mit wenigstens einer seitlich eingeformten Mulde gestaltet als Rastelement für eine im Schraubloch der Formstückrippen vorgesehene Schraubhülse oder Schraube.

In einer weiteren Formgebung soll der Bolzenkörper eine von zwei sich zueinander gegenläufig verjüngenden Bolzenabschnitten begrenzte umlaufende Einschnürung -- ebenfalls als Rastelement- für eine im Schraubloch der Formstückrippen vorgesehene Schraubhülse oder Schraube anbieten.

Erfindungsgemäß wird zudem dem streifenartigen Schraubsteg dieser Ausgestaltung an seiner Unterfläche eine zentrale Anformung zugeordnet, in deren Bereich ein ebenfalls zentraler Schraubdurchbruch für den Gewindebereich der Spannschraube vorgesehen ist. An jener Anformung findet sich ein Rundschlitz zur besseren Fixierung des Schraubsteges, dessen Oberfläche querschnittlich teilkreisförmig gekrümmt und/oder längsschnittlich mit zwei gegenläufigen Pultflächen versehen sein kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
Fig. 1: die Stirnansicht eines -- Längsnuten aufweisendenstranggepressten Hohlprofils mit in eine der Längsnuten eingeschobenem Verbindungsorgan für ein an jenes Hohlprofil rechtwinkelig angesetztes zweites Hohlprofil gleicher Formgebung;
   - Fig. 2:: das -- teilweise geschnittene -- zweite Hohlprofil der Fig. 1 ohne Verbindungsorgan;
   - Fig. 3:: einen Teil des Verbindungsorgans in gegenüber Fig. 1 vergrößerter und teilweise geschnittener Seitenansicht;
   - Fig. 4:: einen vergrößerten Ausschnitt aus Fig. 3;
   - Fig. 5:: die Stirnansicht zu Fig. 3;
   - Fig. 6, 7:: Seitenansicht und Draufsicht eines mutterartigen Teiles des Verbindungsorgans;
   - Fig. 8:: die teilweise geschnittene Stirnansicht eines querschnittlich quadratischen Hohlprofils mit an ihm durch ein Verbindungsorgan rechtwinkelig festgelegtem- in Längsrichtung geschnittenem -- zweiten Hohlprofil gleicher Formgebung;
   - Fig. 9, 10:: Seitenansicht und -- kreuzförmige -- Draufsicht eines Teils des Verbindungsorgans;
   - Fig.11,12:: zwei Ansichten eines weiteren -- bolzenartigen -- Teils des Verbindungsorgans;
   - Fig. 13:: eine Ansicht einer anderen Ausgestaltung des Teils nach Fig. 11, 12;
   - Fig. 14,15:: Untersicht und Seitenansicht eines gegenüber Fig. 8 bis 13 vergrößerten mutterartigen Teils des Verbindungsorgans;
   - Fig. 16:: die Frontansicht zu Fig. 14, 15;
   - Fig. 17:: Teilansicht gemäß Pfeil XVII der Fig. 14 nach Bearbeitung dieses Teiles;

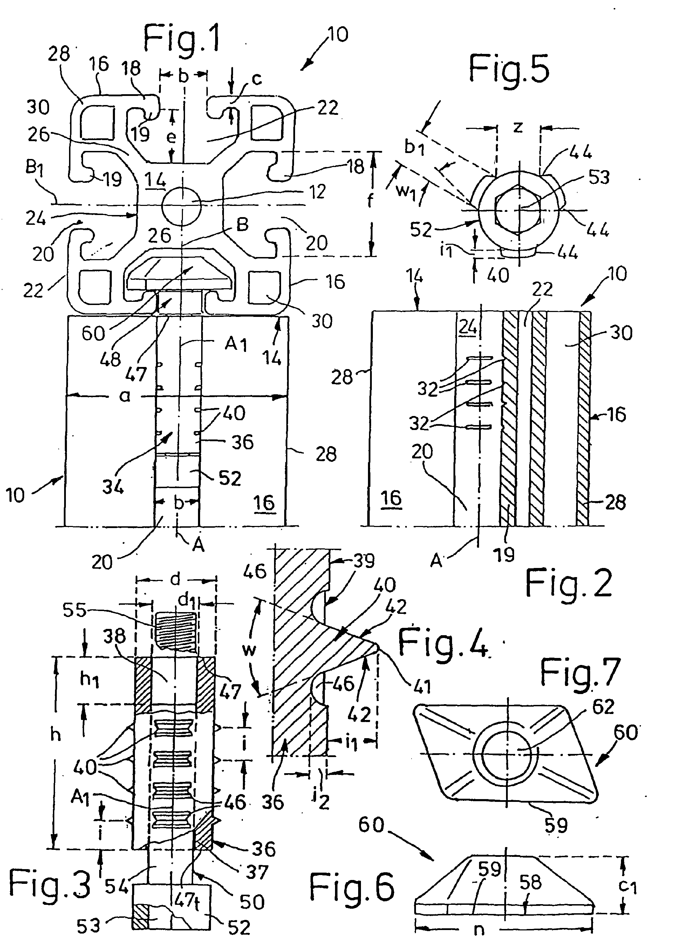

Ein stranggepresstes Hohlprofil 10 quadratischen Querschnitts der äußeren Seitenlänge a von hier 40 mm mit in Fig. 1 durch das -- von einem in der Profillängsachse A verlaufenden Profilkanal 12 bestimmten -- Zentrum seiner Stirnfläche 14 gelegten Querschnittsachsen B, B₁ als Symmetrieachsen weist jeweils in der Mitte seiner Profilseitenflächen 16 eine -- beidseits von querschnittlich hakenartigen Formrippen 18 der Dicke c von hier 2 mm begrenzte -- Längsnut 20 einer Breite b von beispielsweise 8 mm auf, die zur Profillängsachse A hin in einen querschnittlich hinterschnittenen Nutenraum 22 übergeht. Die Hakenenden 19 der Formrippen 18 sind zum Boden oder Nutentiefsten 24 des Nutenraumes 22 gerichtet. Letzterer ist eine von jenen Formrippen 18 übergriffene rinnenartige Ausnehmung, und der lichte Abstand e seines Bodens 24 von den Formrippen 18 mißt hier 10 mm, die maximale Breite f des Nutenraumes 22 etwa 20 mm.

Jenen vier die Nutentiefsten 24 bildenden Flächen ist jeweils beidseits ihres Querschnitts eine armartige Rippe 26 zugeordnet, die zu den Querschnittsachsen B, B₁ in einem Winkel von 45° geneigt verläuft. Diese Rippen 26 gehen in die Eckbereiche 28 des Hohlprofils 10 über; in jedem dieser Eckbereiche 28 befindet sich -- parallel zur Profillängsachse A -- ein Eckkanal 30 nahezu quadratischen Querschnitts.

An eine Seitenfläche 16 des in Fig. 1 oberen Hohlprofils 10 ist rechtwinkelig -- also mit seiner Stirnfläche 14 -- ein zweites Hohlprofil 10 identischen Querschnitts angelegt sowie durch ein Verbindungsorgan 34 angeschlossen. Dieses weist eine Hülse 36 der Länge h von 25 mm sowie des Außendurchmessers d von 10,2 mm und des Innendurchmessers d₁ von 6,0 mm auf; der zylindrische Hülsenraum 37 geht am oberen Hülsenende in einen Sechskantbereich 38 axialer Länge h₁ von 6 mm über. Von der Außenfläche 39 der Hülse 36 ragen im Bereich jenes zylindrischen Hülsenraumes 37 -- in axialen mittleren Abständen i von etwa 4 mm voneinander -- radiale Außenrippen 40 ab der Kragweite i₁ von etwa 1 mm und der Frontbreite b₁ von 5 mm.

Gemäß Fig. 4 ist der achsparallele Schnitt der Außenrippen 40 dreiecksförmig; die beiden von der Rippenspitze 41 ausgehenden Rippenflächen 42 bestimmen einen Querschnittswinkel w von nahezu 45°. Diese Rippenflächen 42 gehen jeweils in eine in die Außenfläche 39 eingeformte Rinne 46 der Tiefe i₂ von 0,3 mm über. Die beiden Seitenkanten jeder der -- in drei achsparallelen Gruppen gleichen Umfangsabstandes z angeordneten- Außenrippen 40 sind gemäß Fig. 5 in einem Winkel w₁ von 15° zueinander geneigt. Im übrigen entspricht die Länge des Umfangsabstandes z etwa jener der Frontbreite b₁ der Außenrippen 40.

Im Hülsenraum 37, 38 lagert eine Spannschraube 50, deren Schraubenkopf 52 ein Sechskantloch 53 für einen -- nicht dargestellten -- INBUS-Schlüssel anbietet, wobei der Schraubenkopf 52 in Spannstellung dem unteren Hülsenrand 47ₜ anliegt. An den Schraubenkopf 52 schließt ein Rundschaft 54 an, der in einen Schraubschaft 55 als Gewindebereich übergeht. Dessen freies Ende durchsetzt in Fig. 1 einen Ring 48 aus elastischem Werkstoff, der sich in Spannstellung zwischen den gegenüberliegenden Hakenenden 19 der Formrippen 18 des Hohlprofils 10 erstreckt und der Unterfläche 58 eines mutterartigen Schraubkopfes 60 anliegt; dieser sitzt dabei den Endflächen der beiden Hakenenden 19 auf. Der in Draufsicht leistenartige Schraubkopf 60 -- der Dicke c₁ von etwa 6 mm sowie der Diagonallänge n von 25 mm -- ist gemäß Fig. 6, 7 von rautenartigem Grundriss und mit einem zentralen Schraubloch 62 für die Spannschraube 50 ausgestattet. Vom Schraubloch 62 fällt die Oberfläche des Schraubkopfes 60 zu dessen Fußkanten 59 ab.

Zur Verbindung beider Hohlprofile 10 wird die Hülse 36 des Verbindungsorgans 34 in einen Nutenraum 22 des in Fig. 1 unteren Hohlprofils 10 eingedreht, wobei ihre Außenrippen 40 während des Drehvorganges der Hülse 36 in das Nutentiefste 24 sowie die Seitenflächen der Hakenenden 19 eindringen und gemäß Fig. 2 Radialnuten 32 erzeugen. Möglich ist es aber auch, diese Radialnuten 32 andersartig zu erzeugen. Hier wird das Hohlprofil 10 dann achsparallel eingeschoben, bis die Außenrippen 40 der Hülse 36 in die entsprechend geformten Radialnuten 32 eingreifen, welche -- wie oben angedeutet -- im Nutentiefsten 24 sowie den einander zugekehrten Seitenflächen der Hakenenden 19 vorgesehen sind. In dieser Stellung der Hülse 36 fluchtet der obere Hülsenrand 47 mit der Stirnfläche 14 des Hohlprofils 10 und die Längsachse A₁ der Hülse 36 steht parallel zur Profillängsachse A.

Ist die Hülse 36 derart fixiert sowie der Schraubkopf 60 in einen der Nutenräume 24 des anderen bzw. oberen Hohlprofils 10 eingeschoben, kann die Spannschraube 50 in der Hülse 36 gedreht und so der Schraubkopf 60 mit seiner Unterfläche 58 an die Hakenenden 19 gepresst werden; dieser Presssitz ist eine sichere Halterung für die Einheit aus den beiden zueinander rechtwinkelig stehenden Hohlprofilen 10.

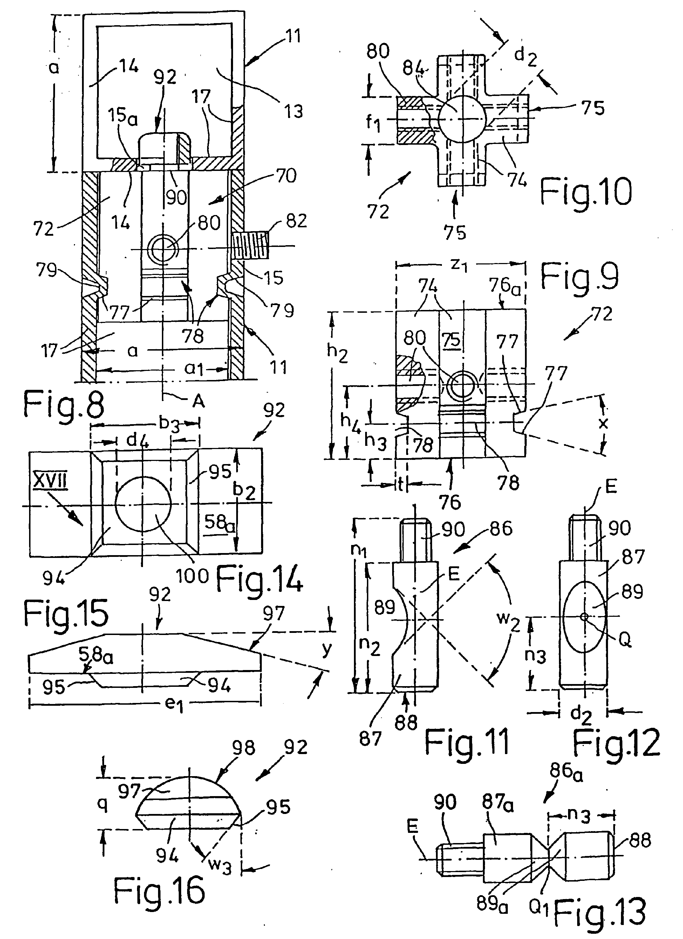

Die beiden miteinander rechtwinkelig verbundenen Hohlprofile 11 der Fig. 8 sind quadratischen Querschnitts einer äußeren Seitenlänge a von beispielsweise 40 mm sowie aus einer Aluminiumlegierung stranggepresst. Das Verbindungsorgan 70 enthält hier ein Stahlformstück 72 der Höhe h₂ von 38 mm kreuzförmigen Grundrisses, dessen Grundrisslänge z₁ hier 34 mm misst und das damit in die Hohlprofile 11 entsprechender lichter Weite a₁ eingeschoben werden kann; die Breite f₁ der das Stahlformstück 72 bildenden Metallrippen 74 beträgt 12 mm. Die Längsachse des Stahlformstücks 72 fällt in die Profillängsachse A des Hohlprofils 11. Jede dieser Metallrippen 74 ist an ihren seitlichen Stirnkanten 75 -- in mittlerem Abstand h₃ von 9 mm -- zur unteren Längskante 76 mit einem Einschnitt 78 von 3 mm Tiefe t versehen, der sich dank geneigter Seitenwände 77 querschnittlich nach außen in einem Winkel x von etwa 35° konisch erweitert. In einem mittleren Abstand h₄ von etwa 20 mm zu jener unteren Längskante 76 findet sich an jeder Stirnkante 75 der Metallrippen 74 ein Schraubloch 80 für eineeine Seitenwand 17 des Hohlprofils 11 an einen Durchbruch 15 durchsetzende -- Schraubhülse 82; letztere legt das Stahlformstück 72 so im Hohlprofil 11 fest, dass dessen Stirnfläche 14 mit den oberen Längskanten 76ₐ der Rippen 72 fluchtet. Zudem wird dann zur innigen Verbindung des Stahlformstücks 72 mit dem Hohlprofil 11 in zwei gegenüberliegenden Seitenwänden 17 jeweils eine Einformung 79 eingeschlagen, die sich an die Innenflächen der benachbarten Einschnitte 78 anschmiegt. Tiefe und Länge dieser Einformungen oder Kerben 79 werden von der Gestalt jener Einschnitte 78 vorgegeben.

Fig. 10 zeigt einen zentralen Durchgang 84 des Durchmessers d₂ von 12 mm für einen darin verschieblichen Haltebolzen 86 der Gesamtlänge n₁ von 45 mm; ein -- in den Durchgang 84 passender- Bolzenkörper 87 der Länge n₂ von 33 mm des Haltebolzens 86 geht in einen M8-Gewindebolzen 90 über. In dem Bolzenkörper 87 ist in Abstand n₃ von 18 mm zu dessen Bodenfläche 88 das Zentrum Q einer umrisslich ovalen Muldeneinformung 89 zu erkennen (Fig. 11, 12). Deren Längsschnittform wird im übrigen durch einen rechten Winkel w₂ bestimmt, der parallel zur Bolzenachse E verläuft.

Bei der Ausgestaltung des Haltebolzens 86ₐ nach Fig. 13 istin Abstand n₃ von 18 mm zur Bodenfläche 88 -- im Bolzenkörper 87ₐ eine Einschnürung Q₁ zu erkennen, von der sich konisch erweiternde Bolzenabschnitte 89ₐ ausgehen.

Beide Einformungen 89, Q₁ dienen der Aufnahme des inneren Endes der erwähnten Schraubhülse 82 zur Lagefixierung des Haltebolzens 86 bzw. 86ₐ.

In Spannstellung durchsetzt der Gewindebolzen 90 einen Durchbruch 15ₐ in einer Seitenwand 17 des in Fig. 8 oberen Hohlprofils 11, so dass auf ihn ein in dessen Profilinnenraum 13 anzuordnender Schraubsteg 92 als Durchsteckmutter der Länge e₁ von 30 mm und der Breite b₂ von 15 mm aufgebracht zu werden vermag.

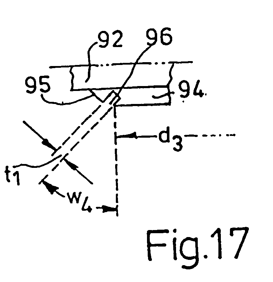

Die Unterfläche 58ₐ des Schraubsteges 92 der Gesamthöhe q von etwa 7 mm ist in Längsmitte mit einer stufenartigen Anformung 94 einer Breite b₃ von 11 mm versehen; in deren in einem Winkel w₃ von 40° zur Vertikalen geneigten Seitenfläche 95 ist gemäß Fig. 17 ein -- in einem Winkel w₄ von 40° zur Vertikalen geneigterRundschlitz 96 der Weite t₁ von etwa 1,2 mm eingebracht. Der Rundschlitz 96, dessen innerer Durchmesser d₃ etwa 14 mm misst, umgibt einen zentralen Schraubdurchbruch 100 des Durchmessers d₄ von hier 6,8 mm.

Vor allem Fig. 15, 16 sind zwei in einem Winkel y von 15° geneigte Pultflächen 97 in Längsrichtung der Oberfläche 98 des Schraubsteges 92 zu entnehmen sowie die Wölbung letzterer.

## Patentansprüche

1. Verbindungseinrichtung (34) aufweisend eine Spannschraube (50), ein Gegenelement (60) und eine Hülse (36), zum Anschluss eines einen Innenraum (22) aufweisenden ersten Werkstückes, insbesondere eines strangartigen Hohlprofils (10), an ein anderes derartiges, zweites Werkstück (10) mittels der Spannschraube (50), deren Schaft (54, 55) zum Eingreifen in eine Öffnung, insbesondere eine Längsnut (20), des zweiten Werkstückes vorgesehen ist und in einem Innenraum des zweiten Werkstückes in das Gegenelement (60) einsetzbar ist, wobei der Schaft (54, 55) der Spannschraube die mit Außenrippen (40) versehene Hülse (36) durchsetzt, die in der Längsnut des ersten Werkstücks so festlegbar ist, dass ein Gewindebereich (55) der Spannschraube über eine Stirnfläche (14) des ersten Werkstücks ragt und in Abstand zu dieser mit einem Schraubenkopf (52) versehen ist, wobei dem Gewindebereich (55) der Spannschraube (50) das auf diesen aufbringbare Gegenelement in Form eines mutterartigen Schraubkopfes (60) zugeordnet sowie in eine hinterschnittene Längsnut (20) des anderen, zweiten Werkstücks (10) einschiebbar ausgebildet ist,
**dadurch gekennzeichnet,**
**dass** die Hülse (36) zumindest drei in einem, insbesondere gleichen, Umfangsabstand beabstandete zur Längsachse (A₁) der Hülse (36) parallele Gruppen von Außenrippen (40) aufweist, die in Befestigungslage Radialnuten (32) des ersten Werkstücks zugeordnet sind, wobei die Radialnuten (32) im Nutentiefsten (24) sowie in zueinander weisenden Flächen von die Längsnut (20) an der Profilseitenfläche (16) begrenzenden Formrippen (18) anbringbar sind.

2. Verbindungseinrichtung nach Anspruch 1, **dadurch gekennzeichnet, dass** die querschnittlich etwa dreiecksförmige Außenrippe (40) mit ihren Rippenflächen (42) in Formrinnen (46) der Hülsenaußenfläche (39) übergeht.

3. Verbindungseinrichtung nach Anspruch 2, **dadurch gekennzeichnet, dass** die Rippenspitzen (41) mehrerer Außenrippen (40) zueinander parallel verlaufen oder eine gemeinsame Ringkontur bestimmen.

4. Verbindungseinrichtung nach Anspruch 1, **dadurch gekennzeichnet, dass** die Außenrippen (40) der Hülse (36) in vorhandene Radialnuten (32) des ersten Werkstückes (10) einsetzbar sind.

5. Verbindungseinrichtung nach einem der Ansprüche 1 bis 3, **gekennzeichnet durch** einen Ring (48) aus elastischem Werkstoff, wobei die Hülse (36) so festlegbar im ersten Werkstück (10) ist, dass ein Hülsenrand (47) mit einer Stirnfläche (14) des Werkstückes fluchtet, wobei gegebenenfalls zwischen dem Hülsenrand (47) und dem Schraubkopf (60) der den Gewindebereich (55) der Spannschraube (50) umgebende Ring (48) angeordnet ist.

6. Verbindungseinrichtung nach einem der Ansprüche 1 bis 5, **dadurch gekennzeichnet, dass** der auf die Spannschraube (50) aufschraubbare Schraubkopf (60) plattenförmig ausgebildet ist, wobei gegebenenfalls die Länge (n) des Schraubkopfes (60) etwas kürzer ist als die Breite (f) des ihn aufnehmenden Nutenraumes (22) der hinterschnittenen Längsnut (20).

7. Werkstückverbund aufweisend ein erstes Werkstück, insbesondere ein strangartiges Hohlprofil (10), und ein anderes derartiges zweites Werkstück (10), und eine Verbindungseinrichtung (34) nach einem der Ansprüche 1 bis 6, aufweisend eine Spannschraube (50), ein Gegenelement (60) und eine Hülse (36), welche das einen Innenraum (22) aufweisende erste Werkstück, insbesondere ein strangartiges Hohlprofil (10), an das andere derartige zweite Werkstück (10) anschließt, mittels der Spannschraube (50), deren Schaft (54, 55) in eine Öffnung, insbesondere eine Längsnut (20), des zweiten Werkstückes eingreift und in einem Innenraum des zweiten Werkstückes in das Gegenelement (60) eingesetzt ist, wobei der Schaft (54, 55) der Spannschraube die mit Außenrippen (40) versehene Hülse (36) durchsetzt, die in der Längsnut des ersten Werkstücks so festgelegt ist, dass ein Gewindebereich (55) der Spannschraube über eine Stirnfläche (14) des ersten Werkstücks ragt und in Abstand zu dieser mit einem Schraubenkopf (52) versehen ist, wobei dem Gewindebereich (55) der Spannschraube (50) das auf diesen aufgebrachte Gegenelement in Form eines mutterartigen Schraubkopfes (60) zugeordnet sowie in eine hinterschnittene Längsnut (20) des anderen, zweiten Werkstückes (10) eingeschoben ist, **dadurch gekennzeichnet, dass** die Hülse (36) zumindest drei zur Längsachse (A₁) der Hülse (36) parallele Gruppen von Außenrippen (40) aufweist, die in Befestigungslage Radialnuten (32) des ersten Werkstücks zugeordnet sind, wobei die Radialnuten (32) im Nutentiefsten (24) sowie in zueinander weisenden Flächen von die Längsnut (20) an der Profilseitenfläche (16) begrenzenden Formrippen (18) angebracht sind.

8. Werkstückverbund nach Anspruch 7, **dadurch gekennzeichnet, dass** die die Längsnut (20) begrenzenden Formrippen (18) hakenartig gestaltet und die zu einem Nutentiefsten (24) gerichteten Flächen der Hakenenden (19) als Widerlager für den Schraubkopf (60) ausgebildet sind.

9. Werkstückverbund nach Anspruch 7 oder 8 mit einer Verbindungseinrichtung nach Anspruch 5, **dadurch gekennzeichnet, dass** die Höhe der Hakenenden (19) der Höhe des zwischen ihnen gelagerten Ringes (48) aus elastischem Werkstoff etwa entspricht.

10. Verbindungseinrichtung (70) aufweisend eine Spannschraube (86), ein Gegenelement (92) und ein Formstück (72), zum Anschluss eines einen Innenraum (13) aufweisenden ersten Werkstückes, insbesondere eines strangartigen Hohlprofils (11), an ein anderes derartiges, zweites Werkstück (11), mittels der Spannschraube (86), deren Schaft (96) zum Durchsetzen einer Öffnung (15) des zweiten Werkstücks vorgesehen ist und in einem von seinen Seitenwänden (17) begrenzten Innenraum (15) des zweiten Werkstücks (11) in das Gegenelement (92) einsetzbar ist, **dadurch gekennzeichnet, dass** in den Innenraum (13) des ersten Werkstückes oder Hohlprofils (11) rechteckigen Querschnitts das die Innenflächen von dessen vier Seitenwänden (17) berührendes, querschnittlich kreuzartiges Formstück (72) einschiebbar und im Hohlprofil so festlegbar ist, dass eine der Stirnflächen des Formstücks (72) mit einer der Stirnflächen (14) des Hohlprofils fluchtet und ein Gewindebereich (90) der Spannschraube (86) über diese Stirnfläche in den Innenraum (13) des anderen, zweiten Hohlprofils (11) ragt sowie dort mit dem als Schraubsteg (92) ausgebildeten und an der Innenfläche dieses anderen, zweiten Hohlprofils anliegenden Gegenelement verbindbar ist.

11. Verbindungseinrichtung nach Anspruch 10, **dadurch gekennzeichnet, dass** die seitlichen Stirnkanten (75) von den vier Formstückrippen (74) des Formstückes (72) mit einem Schraubloch (80) für eine die Seitenwand (17) des Hohlprofils (11) durchsetzende Schraube oder Schraubhülse (82) versehen sind.

12. Verbindungseinrichtung nach Anspruch 10 oder 11, **dadurch gekennzeichnet, dass** die seitliche Stirnkante (75) der Formstückrippe (74) mit wenigstens einem quer zur Längsachse des Formstücks (72) verlaufenden rinnenartigen Einschnitt (78) versehen ist.

13. Verbindungseinrichtung nach Anspruch 12, **dadurch gekennzeichnet, dass** die beiden Seitenwände (77) des Einschnittes (78) in einem Winkel (x) zueinander so geneigt sind, dass sich der Querschnitt des Einschnitts nach außen erweitert, oder dass in Spannstellung des Formstücks (72) der Einschnitt (78) eine Einformung (79) der Seitenwand (17) des Hohlprofils (11) aufnehmen kann, wobei bevorzugt zwei beidseits der Längsachse gegenüberliegende Einschnitte jeweils eine der Einformungen aufnehmen können.

14. Verbindungseinrichtung nach einem der Ansprüche 11 bis 13, **dadurch gekennzeichnet, dass** in der Längsachse des Formstücks (72) ein Durchgang (84) für die Spannschraube in Form eines Haltebolzens (86) verläuft.

15. Verbindungseinrichtung nach Anspruch 11 und 14, **dadurch gekennzeichnet, dass** das Schraubloch (80) in der Formstückrippe (74) in den Durchgang (84) für den Haltebolzen (86) mündet.

16. Verbindungseinrichtung nach Anspruch 14 oder 15, **dadurch gekennzeichnet, dass** der Haltebolzen (86) einen an einen Bolzenkörper (87, 87ₐ) axial angeformten Gewindebolzen (90) enthält.

17. Verbindungseinrichtung nach Anspruch 16, **dadurch gekennzeichnet, dass** in den Bolzenkörper (87) wenigstens eine seitliche Mulde (89) eingeformt ist als Rastelement für eine im Schraubloch (80) der Formstückrippe (74) vorgesehene Schraubhülse (82) oder Schraube (Fig. 11, 12), oder dass der Bolzenkörper (87ₐ) eine von zwei sich zueinander gegenläufig verjüngenden Bolzenabschnitten (89ₐ) begrenzte umlaufende Einschnürung (Q₁) enthält als Rastelement für eine im Schraubloch (80) der Formstückrippe (74) vorgesehene Schraubhülse (82) oder Schraube (Fig. 13).

18. Verbindungseinrichtung nach einem der Ansprüche 10 bis 17,
**dadurch gekennzeichnet, dass** der Schraubsteg (92) streifenartig ausgebildet sowie an einer Unterfläche (58ₐ) mit einer zentralen Anformung (94) versehen ist, in deren Bereich ein zentraler Schraubdurchbruch (100) für den Gewindebereich (90) der Spannschraube (86) vorgesehen ist, wobei gegebenenfalls im Bereich der zentralen Anformung (94) ein Rundschlitz (96) vorgesehen ist.

19. Verbindungseinrichtung nach Anspruch 18, **dadurch gekennzeichnet, dass** die der Unterfläche (58ₐ) fern liegende Oberfläche (98) des Schraubsteges (92) querschnittlich teilkreisförmig gekrümmt und/oder längsschnittlich mit zwei gegenläufigen Pultflächen (97) versehen ist.

20. Werkstückverbund aufweisend ein erstes Werkstück, insbesondere ein strangartiges Hohlprofil (10), und ein anderes derartiges, zweites Werkstück, und eine Verbindungseinrichtung (70) nach einem der Ansprüche 10 bis 19, aufweisend eine Spannschraube (86), ein Gegenelement (92) und ein Formstück (72), welche das einen Innenraum (13) aufweisende erste Werkstück, insbesondere ein strangartiges Hohlprofil (11), an das andere derartige, zweite Werkstück (11) anschließt, mittels der Spannschraube (86), deren Schaft (96) eine Öffnung (15) des zweiten Werkstücks durchsetzt und in einem von seinen Seitenwänden (17) begrenzten Innenraum (15) des zweiten Werkstücks (11) in das Gegenelement (92) eingesetzt ist, **dadurch gekennzeichnet, dass** in den Innenraum (13) des ersten Werkstückes oder Hohlprofils (11) rechteckigen Querschnitts das die Innenflächen von dessen vier Seitenwänden (17) berührendes, querschnittlich kreuzartiges Formstück (72) eingeschoben und im Hohlprofil so festgelegt ist, dass eine der Stirnflächen des Formstückes (72) mit einer der Stirnflächen (14) des Hohlprofils fluchtet und ein Gewindebereich (90) der Spannschraube (86) über diese Stirnfläche in den Innenraum (13) des anderen, zweiten Hohlprofils (11) ragt sowie dort mit dem als Schraubsteg (92) ausgebildeten und an der Innenfläche dieses anderen, zweiten Hohlprofils anliegenden Gegenelement verbunden ist.

## Claims

1. Connecting device (34) having a tightening screw (50), a counter-element (60) and a sleeve (36), for connection of a first workpiece having an interior (22), in particular a bar-like hollow profile (10), to a further such second workpiece (10) by means of a tightening screw (50), the shaft (54, 55) of which is provided for engagement in an opening, in particular a longitudinal groove (20), of the second workpiece, and can be inserted into the counter-element (60) in an interior of the second workpiece, wherein the shaft (54, 55) of the tightening screw penetrates the sleeve (36) provided with outer ribs (40) and which can be fixed in the longitudinal groove of the first workpiece so that a threaded region (55) of the tightening screw projects beyond the end-face surface (14) of the first workpiece and at a distance from the latter is provided with a screw head (52), wherein the counter-element, which can be applied to the threaded region (55) of the tightening screw (50), in the form of a nut-like screw head (60) is assigned to the threaded region (55) of the tightening screw (50) and is formed to be insertable in an undercut longitudinal groove (20) of the further, second workpiece (10), **characterised in that** the sleeve (36) has at least three groups of outer ribs (40) which are parallel to the longitudinal axis (A₁) of the sleeve (36) and spaced at an, in particular uniform, peripheral distance, which groups of outer ribs (40) are assigned to radial grooves (32) of the first workpiece in attachment position, wherein the radial grooves (32) can be attached in the groove base (24) and in surfaces pointing to one another of shaped ribs (18) defining the longitudinal groove (20) on the profile side surface (16).

2. Connecting device according to claim 1, **characterised in that** the in cross-section approximately triangular outer rib (40) with its rib surfaces (42) transfers into shaped channels (46) of the sleeve outer surface (39).

3. Connecting device according to claim 2, **characterised in that** the rib tips (41) of several outer ribs (40) run parallel to one another or define a common ring contour.

4. Connecting device according to claim 1, **characterised in that** the outer ribs (40) of the sleeve (36) can be inserted in existing radial grooves (32) of the first workpiece (10).

5. Connecting device according to one of claims 1 to 3, **characterised by** a ring (48) made from resilient material, wherein the sleeve (36) can be fixed in the first workpiece (10) so that a sleeve edge (47) is aligned with an end-face surface (14) of the workpiece, wherein the ring (48) surrounding the threaded region (55) of the tightening screw (50) is arranged optionally between the sleeve edge (47) and the screw head (60).

6. Connecting device according to one of claims 1 to 5, **characterised in that** the screw head (60) which can be screwed onto the tightening screw (50) is designed like a plate, wherein optionally the length (n) of the screw head (60) is somewhat shorter than the width (f) of the groove space (22) of the undercut longitudinal groove (20) receiving it.

7. Workpiece composite having a first workpiece, in particular a bar-like hollow profile (10), and a further such second workpiece (10), and a connecting device (34) according to one of claims 1 to 6, having a tightening screw (50), a counter-element (60) and a sleeve (36), which connects the first workpiece having an interior (22), in particular a bar-like hollow profile (10), to the further such second workpiece (10), by means of the tightening screw (50), the shaft (54, 55) of which engages in an opening, in particular a longitudinal groove (20), of the second workpiece and is inserted into the counter-element (60) in an interior of the second workpiece, wherein the shaft (54, 55) of the tightening screw penetrates the sleeve (36) provided with outer ribs (40), which sleeve (36) is fixed in the longitudinal groove of the first workpiece so that a threaded region (55) of the tightening screw projects beyond an end-face surface (14) of the first workpiece and at a distance from the latter is provided with a screw head (52), wherein the counter-element, which can be applied to the threaded region (55) of the tightening screw (50), in the form of a nut-like screw head (60) is assigned to the threaded region (55) of the tightening screw (50) and is inserted in an undercut longitudinal groove (20) of the further, second workpiece (10); **characterised in that** the sleeve (36) has at least three groups of outer ribs (40) which are parallel to the longitudinal axis (A₁) of the sleeve (36), which groups of outer ribs (40) are assigned to radial grooves (32) of the first workpiece in attachment position, wherein the radial grooves (32) are attached in the groove base (24) and in surfaces pointing to one another of shaped ribs (18) defining the longitudinal groove (20) on the profile side surface (16).

8. Workpiece composite according to claim 7, **characterised in that** the shaped ribs (18) defining the longitudinal groove (20) are designed like hooks and the surfaces of the hook ends (19) directed to a groove base (24) are designed as a support for the screw head (60).

9. Workpiece composite according to claim 7 or 8 having a connecting device according to claim 5, **characterised in that** the height of the hook ends (19) corresponds approximately to the height of the ring (48) made from resilient material mounted between them.

10. Connecting device (70) having a tightening screw (86), a counter-element (92) and a moulded piece (72), for connection of a first workpiece having an interior (13), in particular a bar-like hollow profile (11), to a further such second workpiece (11) by means of the tightening screw (86), the shaft (96) of which is provided for penetrating an opening (15) of the second workpiece and can be inserted into the counter-element (92) in an interior (15) of the second workpiece (11) defined by its side walls (17), **characterised in that** the moulded piece (72) of cross-like cross-section touching the inner surfaces of its four side walls (17) can be inserted into the interior (13) of the first workpiece or hollow profile (11) of rectangular cross-section and can be fixed in the hollow profile so that one of the end-face surfaces of the moulded piece (72) is aligned with one of the end-face surfaces (14) of the hollow profile and a threaded region (90) of the tightening screw (86) projects beyond this end-face surface into the interior (13) of the further second hollow profile (11) and can be connected there with the counter-element designed as a screw bar (92) and resting on the inner surface of this further second hollow profile.

11. Connecting device according to claim 10, **characterised in that** the lateral end-face edges (75) of the four moulded piece ribs (74) of the moulded piece (72) are provided with a screw hole (80) for a screw or screw sleeve (82) penetrating the side wall (17) of the hollow profile (11).

12. Connecting device according to claim 10 or 11, **characterised in that** the lateral end-face edge (75) of the moulded piece rib (74) is provided with at least one channel-like cut (78) running transversely to the longitudinal axis of the moulded piece (72).

13. Connecting device according to claim 12, **characterised in that** the two side walls (77) of the cut (78) are inclined at an angle (x) to one another so that the cross-section of the cut is expanded outwards, or **in that** in the tightened position of the moulded piece (72), the cut (78) may receive a moulding (79) of the side wall (17) of the hollow profile (11), wherein preferably two opposing cuts on both sides of the longitudinal axis may receive in each case one of the mouldings.

14. Connecting device according to one of claims 11 to 13, **characterised in that** a passage (84) for the tightening screw in the form of a retaining bolt (86) runs in the longitudinal axis of the moulded piece (72).

15. Connecting device according to claim 11 and 14, **characterised in that** the screw hole (80) in the moulded piece rib (74) leads into the passage (84) for the retaining bolt (86).

16. Connecting device according to claim 14 or 15, **characterised in that** the retaining bolt (86) contains a threaded bolt (90) moulded axially onto a bolt body (87, 87ₐ).

17. Connecting device according to claim 16, **characterised in that** at least one lateral depression (89) is moulded into the bolt body (87) as a locking element for a screw sleeve (82) or screw (Figure 11, 12) provided in the screw hole (80) of the moulded piece rib (74), or **in that** the bolt body (87ₐ) contains an annular constriction (Q₁) defined by two bolt sections (89ₐ) tapering in opposite directions to one another as a locking element for a screw sleeve (82) or screw (Figure 13) provided in the screw hole (80) of the moulded piece rib (74).

18. Connecting device according to one of claims 10 to 17, **characterised in that** the screw bar (92) is designed to be like a strip and on a lower surface (58ₐ) is provided with a central moulding (94), in the region of which a central screw opening (100) is provided for the threaded region (90) of the tightening screw (86), wherein a round slot (96) is provided optionally in the region of the central moulding (94).

19. Connecting device according to claim 18, **characterised in that** the surface (98) of the screw bar (92) lying remote from the lower surface (58ₐ) is curved like a graduated circle in cross-section and/or in longitudinal section is provided with two desk surfaces (97) going in opposite directions.

20. Workpiece composite having a first workpiece, in particular a bar-like hollow profile (10), and a further such second workpiece, and a connecting device (70) according to one of claims 10 to 19, having a tightening screw (86), a counter-element (92) and a moulded piece (72), which connects the first workpiece having an interior (13), in particular a bar-like hollow profile (11), to the further such second workpiece (11), by means of the tightening screw (86), the shaft (96) of which penetrates an opening (15) of the second workpiece and is inserted into the counter-element (92) in an interior (15) of the second workpiece (11) defined by its side walls (17), **characterised in that** the moulded piece (72) of cross-like cross-section touching the inner surfaces of its four side walls (17) is inserted into the interior (13) of the first workpiece or hollow profile (11) of rectangular cross-section and is fixed in the hollow profile so that one of the end-face surfaces of the moulded piece (72) is aligned with one of the end-face surfaces (14) of the hollow profile and a threaded region (90) of the tightening screw (86) projects beyond this end-face surface into the interior (13) of the further second hollow profile (11) and is connected there to the counter-element designed as a screw bar (92) and resting on the inner surface of this further, second hollow profile.

## Revendications

1. Dispositif d'assemblage (34) comportant une vis de tension (50), un contre-élément (60) et un manchon (36), pour le raccordement d'une première pièce dotée d'un espace intérieur (22), en particulier d'un profilé creux (10) en forme de barre, à une autre seconde pièce (10) de ce type, au moyen de la vis de tension (50) dont la tige (54, 55) est prévue pour s'engager dans une ouverture, en particulier une rainure longitudinale (20), dont est munie la seconde pièce et qui est insérable dans le contre-élément (60) dans un espace intérieur de la seconde pièce, la tige (54, 55) de la vis de tension traversant le manchon (36) doté de nervures extérieures (40) qui peut être fixé dans la rainure longitudinale de la première pièce de manière à ce qu'une zone filetée (55) de la vis de tension soit saillante au-dessus d'une face frontale (14) de la première pièce et qu'elle soit dotée d'une tête de vis (52) à distance de ladite face frontale, le contre-élément applicable sur la zone filetée (55) de la vis de tension (50), sous la forme d'une tête de vis (60) en forme d'écrou, étant associé à ladite zone filetée, et de manière à ce qu'il soit réalisé insérable dans une rainure longitudinale (20) contre-dépouillée de l'autre seconde pièce (10),
**caractérisé en ce que**,
le manchon (36) comporte au moins trois groupes parallèles de nervures extérieures (40), mutuellement distantes de l'axe longitudinal A₁ du manchon (36), en particulier à égale distance périphérique, qui sont associées en position de tension, à des rainures radiales (32) de la première pièce, les rainures radiales (32) pouvant être placées dans le fond des rainures (24) ainsi que dans des faces de la rainure longitudinale (20) tournées l'une vers l'autre, sur les nervures moulées (18) limitant la face latérale du profilé (16).

2. Dispositif d'assemblage selon la revendication 1, **caractérisé en ce que** la nervure extérieure (40) de section sensiblement triangulaire se raccorde à des gouttières moulées (46) de la face extérieure du manchon (39) par leur faces nervurées (42).

3. Dispositif d'assemblage selon la revendication 2, **caractérisé en ce que** les extrémités des nervures (41) de plusieurs nervures extérieures (40) s'étendent parallèlement entre elles ou déterminent un contour annulaire commun.

4. Dispositif d'assemblage selon la revendication 1, **caractérisé en ce que** les nervures extérieures (40) du manchon (36) sont insérables dans les rainures radiales (32) existantes de la première pièce (10).

5. Dispositif d'assemblage selon l'une quelconque des revendications 1 à 3, **caractérisé par** une bague (48) en matériau élastique, le manchon (36) pouvant être fixé dans la première pièce (10) de telle sorte qu'un bord du manchon (47) s'aligne avec une face frontale (14) de la pièce, la bague (48) étant disposée le cas échéant, entre le bord du manchon (47) et la tête de vis (60) entourant la zone filetée (55) de la vis de tension (50).

6. Dispositif d'assemblage selon l'une quelconque des revendications 1 à 5, **caractérisé en ce que** la tête de vis (60) vissable sur la vis de tension (50) est réalisée de forme plate, la longueur (n) de la tête de vis (60) étant le cas échéant, légèrement plus courte que la largeur (f) de l'espace de rainure (22) de la rainure longitudinale (20) contre-dépouillée.

7. Assemblage de pièces comprenant une première pièce, en particulier un profilé creux (10) en forme de barre, une autre seconde pièce (10) de ce type, et un dispositif d'assemblage (34) selon l'une quelconque des revendications 1 à 6, comportant une vis de tension (50), un contre-élément (60) et un manchon (36), qui raccorde une première pièce dotée d'un espace intérieur (22), en particulier un profilé creux (10) en forme de barre, à l'autre seconde pièce (10) de ce type, au moyen d'une vis de tension (50) dont la tige (54, 55) est prévue pour s'engager dans une ouverture, en particulier une rainure longitudinale (20), de la seconde pièce et qui est insérée dans le contre-élément (60), dans un espace intérieur de la seconde pièce, la tige (54, 55) de la vis de tension traversant le manchon (36) doté de nervures extérieures (40) qui est fixé dans la rainure longitudinale de la première pièce de manière à ce qu'une zone filetée (55) de la vis de tension soit saillante au-dessus d'une face frontale (14) de la première pièce et qu'elle soit dotée d'une tête de vis (52) à distance de ladite face frontale, le contre-élément applicable sur la zone filetée (55) de la vis de tension (50), sous la forme d'une tête de vis (60) en forme d'écrou, étant associé à ladite zone filetée, et de manière à ce qu'il soit inséré dans une rainure longitudinale (20) contre-dépouillée de l'autre seconde pièce (10), **caractérisé en ce que** le manchon (36) comporte au moins trois groupes de nervures extérieures (40), parallèles à l'axe longitudinal A₁ du manchon (36), qui sont associées en position de tension, à des rainures radiales (32) de la première pièce, les rainures radiales (32) étant placées dans le fond des rainures (24) ainsi que dans des faces de la rainure longitudinale (20) tournées l'une vers l'autre, sur les nervures moulées (18) limitant la face latérale du profilé (16).

8. Assemblage de pièces selon la revendication 7, **caractérisé en ce que** la rainure longitudinale (20) limitant les nervures moulées (18) est conformée en crochet et **en ce que** les faces des extrémités du crochet (19) orientées vers un fond de rainure (24) sont réalisées comme contre-appui pour la tête de vis (60).

9. Assemblage de pièces selon la revendication 7 ou 8, avec un dispositif d'assemblage selon la revendication 5, **caractérisé en ce que** la hauteur des extrémités du crochet (19) correspond sensiblement à la hauteur de la bague (48) en matériau élastique, logée entre elles.

10. Dispositif d'assemblage (70) comportant une vis de tension (86), un contre-élément (92) et une pièce moulée (72) pour le raccordement d'une première pièce dotée d'un espace intérieur (13), en particulier un profilé creux (11) en forme de barre, à une autre seconde pièce (11) de ce type, au moyen d'une vis de tension (86) dont la tige (96) est prévue pour traverser une ouverture (15) de la seconde pièce qui est insérable dans le contre-élément (92), dans un espace intérieur (15) de la seconde pièce (11) limité par ses parois latérales (17), **caractérisé en ce que** dans l'espace intérieur (13) de la première pièce ou du profilé creux (11) de section rectangulaire est insérable la pièce moulée (72) de section cruciforme, en contact avec les faces intérieures de ses quatre parois latérales (17) et peut être fixée dans le profilé de creux de telle sorte que l'une des faces frontales de la pièce moulée (72) s'aligne avec l'une des faces frontales (14) du profilé creux et qu'une zone filetée (90) de la vis de tension (86) est saillante au-dessus de cette face frontale, dans l'espace intérieur (13) de l'autre second profilé creux (11) et qu'elle peut se raccorder à cet emplacement, au contre-élément réalisé comme barre vissée (92) et appliqué sur la face intérieure de cet autre second profilé creux.

11. Dispositif d'assemblage selon la revendication 10, **caractérisé en ce que** les arêtes latérales extérieures (75) des quatre nervures de pièce moulée (74) de la pièce moulée (72) sont munies d'un trou de vis (80) pour une vis ou un manchon vissé (82) traversant la paroi latérale (17) du profilé creux (11).

12. Dispositif d'assemblage selon la revendication 10 ou 11, **caractérisé en ce que** l'arête latérale extérieure (75) de la nervure de la pièce moulée (74) est munie d'au moins une entaille (78) en forme de nervure, s'étendant transversalement à l'axe longitudinal de la pièce moulée (72).

13. Dispositif d'assemblage selon la revendication 12, **caractérisé en ce que** les deux parois latérales (77) de l'entaille (78) sont inclinées en formant un angle (x) entre elles, de sorte que la section de l'entaille s'élargit vers l'extérieur ou qu'en position de tension de la pièce moulée (72), l'entaille (78) peut loger une concavité (79) de la paroi latérale (17) du profilé creux (11), deux entailles situées l'une en face de l'autre, de part et d'autre de l'axe longitudinal pouvant de préférence loger chacune l'une des concavités.

14. Dispositif d'assemblage selon l'une quelconque des revendications 11 à 13, **caractérisé en ce qu'**un passage (84) pour la vis de tension sous la forme d'un goujon de maintien (86) s'étend dans l'axe longitudinal de la pièce moulée (72).

15. Dispositif d'assemblage selon les revendications 11 et 14, **caractérisé en ce que** le trou de vis (80) dans la nervure de la pièce moulée (74) aboutit dans le passage (84) pour le goujon de maintien (86).

16. Dispositif d'assemblage selon la revendication 14 ou 15, **caractérisé en ce que** le goujon de maintien (86) comporte un boulon fileté (90), moulé axialement sur un corps de boulon (87, 87ₐ).

17. Dispositif d'assemblage selon la revendication 16, **caractérisé en ce que** dans le corps de boulon (87) est moulée au moins une cavité latérale (89) en tant qu'élément d'accrochage pour un manchon vissé (82) ou une vis (fig. 11, 12), prévu dans un trou de vis (80) de la nervure de pièce moulée (74), ou **en ce que** le corps de boulon (87ₐ) comporte un rétrécissement circulaire (Q₁), limité par deux parties de boulon (89ₐ) se rétrécissant en sens contraire, en tant qu'élément d'accrochage pour un manchon vissé (82) ou une vis (fig. 13), prévu dans le trou de vis (80) de la nervure de la pièce moulée (74).

18. Dispositif d'assemblage selon l'une quelconque des revendications 10 à 17, **caractérisé en ce que** la barre vissée (92) est conformée en bande et est munie sur une face inférieure (58ₐ), d'une forme rapportée centrale (94), dans la zone de laquelle est prévue une traversée de vis (100) centrale pour la zone filetée (90) de la vis de tension (86), une fente circulaire (96) étant prévue le cas échéant, dans la région de la forme rapportée centrale (94).

19. Dispositif d'assemblage selon la revendication 18, **caractérisé en ce que** la face supérieure (98) de la barre vissée (92), éloignée de la face inférieure (58ₐ), est cintrée transversalement en forme de cercle partiel et/ou dotée longitudinalement de deux faces en pente (97) en sens contraire.

20. Assemblage de pièces comprenant une première pièce, en particulier un profilé creux (10) en forme de barre, une autre seconde pièce de ce type et un dispositif d'assemblage (70) selon l'une quelconque des revendications 10 à 19, comportant une vis de tension (86), un contre-élément (92) et une pièce moulée (72) qui raccorde une première pièce dotée d'un espace intérieur (13), en particulier un profilé creux (11) en forme de barre, à l'autre seconde pièce (11) de ce type, au moyen d'une vis de tension (86) dont la tige (96) traverse une ouverture (15) de la seconde pièce et qui est insérée dans le contre-élément (92), dans un espace intérieur (15) de la seconde pièce (11), limité par ses parois latérales (17), **caractérisé en ce que** dans l'espace intérieur (13) de la première pièce ou du profilé creux (11) de section rectangulaire est insérée la pièce moulée (72) de section cruciforme, en contact avec les faces intérieures de ses quatre parois latérales (17) et est fixée dans le profilé en creux, de telle sorte que l'une des faces frontales de la pièce moulée (72) s'aligne avec l'une des faces frontales (14) du profilé creux et qu'une zone filetée (90) de la vis de tension (86) s'engage par cette face frontale, dans l'espace intérieur (13) de l'autre second profilé creux (11) et qu'elle se raccorde à cet emplacement, au contre-élément réalisé comme barre vissée (92) et appliqué sur la face intérieure de cet autre second profilé creux.
